# EUROPÄISCHE PATENTSCHRIFT

(11) **EP 3 083 868 B1**
(45) Veröffentlichungstag und Bekanntmachung des Hinweises auf die Patenterteilung: **04.12.2019**
(21) Anmeldenummer: 14801908.6
(22) Anmeldetag: 23.10.2014
(51) Int. Cl.: B01J 2/22, B01J 2/26, C09K 3/14, C04B 35/111

(54) **VERFAHREN ZUR HERSTELLUNG VON SCHLEIFMITTEL**
METHOD FOR PRODUCING ABRASIVES
PROCÉDÉ DE PRODUCTION DE MATÉRIAUX ABRASIFS

(30) Priorität: 18.12.2013 AT 9682013
(43) Veröffentlichungstag der Anmeldung: 26.10.2016
(73) Patentinhaber: Tyrolit - Schleifmittelwerke Swarovski K.G., 6130 Schwaz (AT)
(72) Erfinder: SIGWART, Klaus, A-6230 Brixlegg (AT); HIRSCHMANN, Martin, A-6122 Fritzens (AT)
(74) Vertreter: Torggler & Hofinger Patentanwälte
(86) Internationale Anmeldenummer: PCT/AT2014/000190
(87) Internationale Veröffentlichungsnummer: WO 2015/089527

(56) Entgegenhaltungen:
- US-A- 5 628 952
- US-A1- 2011 146 509
- US-A1- 2013 199 105
- US-A1- 2013 212 952

## Beschreibung

Die Erfindung betrifft ein Verfahren zur Herstellung von Schleifmittel.

Derartige Schleifmittel werden beispielsweise in Schleifbeläge, in Vollschleifkörper oder in Schleifpapiere eingearbeitet. Dabei kommen als Bindung für das Schleifmittel sämtliche bekannte keramische Bindungen und Kunstharzbindungen in Betracht. Einsatzgebiet der genannten Schleifwerkzeuge sind das Schleifen von Stählen, Metallen und Legierungen, Kunststoffen und Holz.

Aus dem Stand der Technik sind unterschiedliche Verfahren zur Herstellung von Schleifmittel bekannt. Beispielsweise offenbart die WO 2013/102177 ein Verfahren, bei welchem eine kontinuierlich bereitgestellte keramische Schicht mittels einer Schneidwalze zerkleinert wird. Die US 2013/199105 A1 zeigt ein Verfahren, bei dem eine aus einem sinterbaren Material erzeugte Schicht mit Sollbruchkanten versehen wird. Bei der US 2013/212952 A1 wird eine Schicht zum Teil mittels eines Lasers zerschnitten, was dem Vorsehen von Sollbruchkanten gleichzusetzen ist. Anschließend erfolgt ein Zerbrechen der Schicht.

Bei den meisten dieser Verfahren handelt es sich um technisch sehr aufwendige und wartungsintensive Verfahren.

Der gegenständlichen Erfindung liegt die Aufgabe zugrunde ein vereinfachtes Verfahren zur Herstellung von Schleifmittel anzugeben.

Diese Aufgabe wird durch die folgenden Verfahrensschritte gelöst:
i. Bereitstellen eines, vorzugsweise Aluminiumhydroxid enthaltenden, Ausgangsgemischs, welches durch Sintern zumindest in Aluminiumoxid überführbar ist, wobei das Ausgangsgemisch vorzugsweise fließfähig ist,
ii. Erzeugen einer Schicht aus dem Ausgangsgemisch mit einer vorbestimmten, einheitlichen Schichtdicke,
iii. Unterteilen der Schicht in voneinander getrennte, vorzugsweise plattenförmigen, Materialabschnitte,
iv. Zerkleinern der Materialabschnitte durch Brechen, in einer Brechvorrichtung und
v. Sintern, wobei entweder die Schicht oder die Materialabschnitte oder die durch Brechen zerkleinerten Materialabschnitte gesintert werden.

Eine der grundlegenden Ideen des erfindungsgemäßen Verfahrens besteht darin, dass die Zerkleinerung der aus dem Ausgangsgemisch erzeugten Schicht in zwei Stufen erfolgt: in einer ersten Stufe durch Unterteilen in, vorzugsweise plattenförmige Materialabschnitte und in einer zweiten Stufe durch Zerkleinern der Materialabschnitte durch Brechen. Dabei ist es erfindungsgemäß vorgesehen, dass der Verfahrensschritt des Sinterns an drei verschiedenen Stellen des Verfahrens durchgeführt werden kann und zwar entweder nach dem Erzeugen der Schicht und vor dem Unterteilen derselben in Materialabschnitte oder nach dem Unterteilen der Schicht in Materialabschnitte und vor dem Zerkleinern dieser Materialabschnitte durch Brechen oder aber nach dem Zerkleinern der Materialabschnitte durch Brechen.

Es sei darauf hingewiesen, dass die Technik, ein, vorzugsweise Aluminiumhydroxid enthaltendes, Ausgangsgemisch durch Sintern zumindest in Aluminiumoxid zu überführen, bereits seit längerem bekannt ist. In diesem Zusammenhang sei auf den sogenannten "Sol-Gel-Prozess" verwiesen. Enthält das Ausgangsgemisch Aluminiumhydroxid können unterschiedliche Modifikationen, wie zum Beispiel Böhmit, zum Einsatz kommen. In Abhängigkeit des Ausgangsgemischs kann es vorkommen, dass neben Aluminiumoxid (typischerweise als alpha-Aluminiumoxid) Nebenphasen, wie z.B. Spinell, entstehen. Diesem Sachverhalt wird durch den Ausdruck "zumindest in Aluminiumoxid" Rechnung getragen.

In einer bevorzugten Ausführungsform des Verfahrens wird die Schicht nach dem Erzeugen und vor dem Zerkleinern der Materialabschnitte in einem weiteren Verfahrensschritt mit Sollbruchkanten versehen, um einerseits den Verfahrensschritt des Zerkleinerns der Materialabschnitte durch Brechen zu erleichtern und andererseits auf die Formgebung der durch Brechen erhaltenen Bruchstücke Einfluss zu nehmen.

Die Erzeugung der Sollbruchkanten kann technisch dadurch realisiert werden, dass eine netz- oder gitterförmige Struktur, vorzugsweise aus Kunststoff, in die Schicht eingelagert wird, wobei die netz- oder gitterförmige Struktur während des Sinterns verbrennt. An den Stellen, an denen sich die netz- oder gitterförmige Struktur befindet, entstehen während des Verbrennens Aussparungen bzw. Materialverjüngungen, welche ein Brechen an diesen Stellen begünstigen. Es sei darauf hingewiesen, dass sich netzförmige und gitterförmige Strukturen dadurch unterscheiden, dass netzförmige Strukturen im Gegensatz zu gitterförmigen Strukturen Knoten aufweisen.

Ein großer Vorteil in Zusammenhang mit der Verwendung netz- oder gitterförmiger Strukturen zur Erzeugung der Sollbruchkanten besteht darin, dass durch die Wahl der Form der netz- oder gitterförmigen Struktur in einfacher Weise die Geometrie und Abmessung der Schleifmittelteilchen festgelegt werden kann. Außerdem ist es möglich, schnell und einfach durch den Wechsel der netz- oder gitterförmigen Struktur die Geometrie und Abmessung der hergestellten Schleifmittelteilchen zu verändern. Als Geometrien für die Öffnungen der netz- oder gitterförmigen Struktur bieten sich Polygone, vorzugsweise Rauten, Quadrate oder Dreiecke, an.

Vorzugsweise kommt eine netz- oder gitterförmige Struktur zum Einsatz, die von der Seite betrachtet eine Höhe kleiner oder gleich 0,5 Millimeter aufweist. Diese Höhe entspricht im Wesentlichen der Stärke der Fäden oder Stege, aus denen die netz- oder gitterförmige Struktur vorteilhafterweise aufgebaut ist.

Es ist es auch denkbar, dass die Sollbruchkanten auf eine andere Art und Weise erzeugt werden, zum Beispiel dadurch, dass die Sollbruchkanten auf die Schicht, vorzugsweise mittels einer Walze, aufgeprägt werden.

Gemäß einer vorteilhaften Ausführungsform des erfindungsgemäßen Verfahrens wird die Schicht aus dem Ausgangsgemisch nach dem Erzeugen vorgetrocknet, bevorzugt bei einer Temperatur zwischen 50° Celsius und 500° Celsius, besonders bevorzugt bei einer Temperatur zwischen 150° Celsius und 400° Celsius. Durch das Vortrocknen wird dem Ausgangsgemisch Flüssigkeit entzogen, sodass es weniger flexibel ist und sich leichter in voneinander getrennte, vorzugsweise plattenförmige, Materialabschnitte unterteilen lässt. Darüber hinaus ist es durch das Vortrocknen möglich - wenn in die Schicht eine netz- oder gitterförmige Struktur zur Erzeugung von Sollbruchkanten eingelagert wird - eine Haftverbindung zwischen dieser netz- oder gitterförmigen Struktur und dem Ausgangsgemisch hervorzurufen.

Es hat sich als günstig erwiesen, dass das Erzeugen der Schicht im Wesentlichen durch Gießen erfolgt und/oder dass die Schicht auf einem Träger, vorzugsweise einem Endlosträgerband, erzeugt wird.

Durch die Dicke der aus dem Ausgangsgemisch erzeugten Schicht lässt sich die Dicke der am Ende des Herstellungsverfahrens vorliegenden Schleifmittelteilchen einstellen, wobei die Dicke im Zuge des Sinterungsprozesses - im Wesentlichen bedingt durch die Reduktion des Flüssigkeitsanteils - noch abnimmt. Vorteilhafterweise wird aus dem Ausgangsgemisch eine Schicht mit einer Dicke von maximal 2,0 Millimeter, vorzugsweise von 0,1 Millimeter bis 1,0 Millimeter, erzeugt.

Handelt es sich um ein fließfähiges Ausgangsgemisch und wird die Schicht auf einem Träger bereitgestellt, so kann die Schichtdicke in einfacher Weise dadurch eingestellt werden, dass eine bestimmte Menge des Ausgangsgemischs pro Zeiteinheit auf den Träger aufgebracht wird und sich dieser Träger mit einer bestimmten Geschwindigkeit bewegt. Dann wird sich automatisch eine bestimmte einheitliche Schichtdicke einstellen.

Handelt es sich jedoch um ein etwas zähflüssigeres Ausgangsgemisch, so kann es als alternative oder ergänzende Maßnahme zur Sicherstellung einer bestimmten Dicke der Schleifmittelteilchen vorgesehen sein, dass die Schichtdicke über einen Spalt mit einer vorbestimmten Höhe eingestellt wird.

Der Verfahrensschritt des Sinterns wird bevorzugt bei einer Temperatur zwischen 1200° Celsius und 1800° Celsius, besonders bevorzugt bei einer Temperatur zwischen 1200° Celsius und 1500° Celsius, durchgeführt.

Wird zur Erzeugung der Sollbruchkanten eine netz- oder gitterförmige Struktur in die Schicht eingelagert, so bietet es sich an für diese netz- oder gitterförmige Struktur ein Material zu verwenden, das bei der genannten Sintertemperatur vollständig verbrennt, jedoch bei niedrigeren Temperaturen, die zum Beispiel bei einem etwaigen Vortrocknungsprozess vorliegen, hitzebeständig ist.

Technisch gesehen kann das Sintern zum Beispiel in einem Durchlaufofen durchgeführt werden. Das bietet sich dann an, wenn die Schicht direkt nach ihrer Erzeugung und vor der Unterteilung der Schicht in voneinander getrennte, vorzugsweise plattenförmige, Materialabschnitte gesintert wird. In diesem Fall ist es vorteilhaft, die Schicht auf einem Träger zu erzeugen, der durch den Durchlaufofen hindurchgeführt wird. Erfolgt das Sintern hingegen nach der Unterteilung der Schicht in voneinander getrennte, vorzugsweise plattenförmige, Materialabschnitte oder aber nach dem Zerkleinern der Materialabschnitte durch Brechen, so bieten sich separate Sinteröfen an, denen die Materialabschnitte bzw. die Bruchstücke nach und nach zugeführt werden.

Möchte man sicherstellen, dass die Schleifmittelteilchen eine bestimmte Größe nicht überschreiten, so hat es sich als vorteilhaft herausgestellt, dass während des oder nach dem Zerkleinern der Materialabschnitte durch Brechen eine Größenauswahl der Bruchstücke durch Sieben erfolgt: Sind die Schleifmittelteilchen klein genug, so werden sie über ein Sieb ausgeschieden.

Weitere Vorteile und Einzelheiten der Erfindung ergeben sich anhand der Figuren und der dazugehörigen Figurenbeschreibung. Dabei zeigen:
- Fig. 1a bis 1c: drei Ausführungsvarianten des erfindungsgemäßen Herstellungsverfahrens, schematisch dargestellt in Form von Flussdiagrammen,
- Fig. 2a bis 2c: die technische Umsetzung des erfindungsgemäßen Herstellungsverfahrens in drei bevorzugten Ausführungsformen anhand von Schemazeichnungen,
- Fig. 3a und 3b: schematisch dargestellt zwei mögliche zum Einsatz kommende netz- oder gitterförmige Strukturen zur Erzeugung von Sollbruchkanten, und
- Fig. 4a bis 4c: schematisch dargestellt drei mögliche mittels des erfindungsgemäßen Verfahrens herstellbare Schleifmittelteilchen.

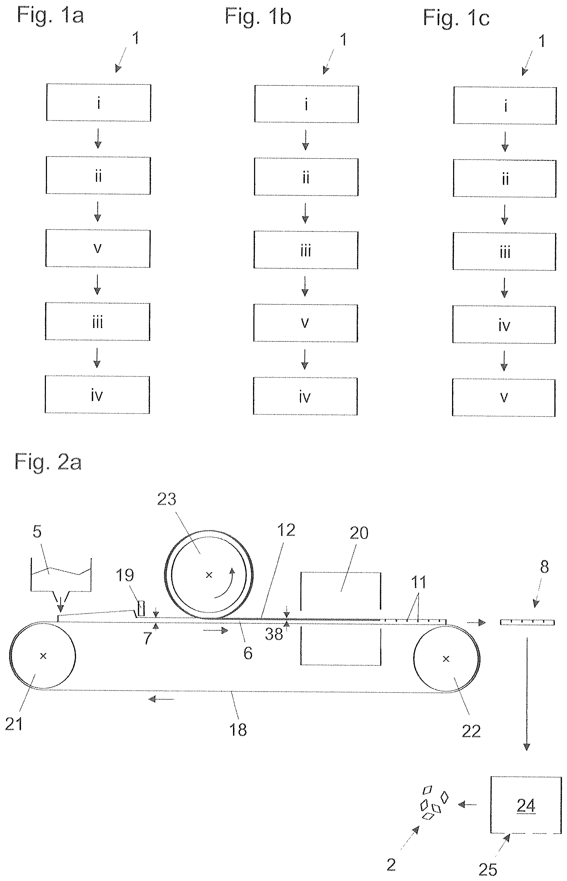

In den Figuren 1a bis 1c sind schematisch anhand von Flussdiagrammen die drei grundlegenden Ausführungsvarianten des erfindungsgemäßen Herstellungsverfahrens 1 dargestellt: In jedem der drei Fälle erfolgt zunächst in dem mit i bezeichneten Verfahrensschritt das Bereitstellen eines, vorzugsweise Aluminiumhydroxid enthaltenden, Ausgangsgemischs, welches durch Sintern zumindest in Aluminiumoxid (und wie weiter oben ausgeführt in etwaige Nebenphasen) überführbar ist und in dem mit ii bezeichneten Verfahrensschritt das Erzeugen einer Schicht aus dem Ausgangsgemisch mit einer vorbestimmten, einheitlichen Schichtdicke. Anschließend wird im Falle des in der Figur 1a dargstellten Ablaufs die Schicht in dem mit v bezeichneten Verfahrensschritt zunächst gesintert und in dem mit iii bezeichneten Verfahrensschritt in voneinander getrennte, vorzugsweise plattenförmige Materialabschnitte unterteilt. Diese Materialabschnitte werden abschließend in dem mit iv bezeichneten Verfahrensschritt durch Brechen zerkleinert. Im Falle der in den Figuren 1b und 1c dargestellten Abläufe wird die aus dem Ausgangsgemisch erzeugte Schicht zunächst in voneinander getrennte, vorzugsweise plattenförmige, Materialabschnitte unterteilt. Anschließend werden im Falle des in der Figur 1b dargestellten Ablaufs diese Materialabschnitte gesintert und dann durch Brechen zerkleinert. Im Falle des in der Figur 1c dargestellten Ablaufs findet erst die Zerkleinerung der Materialabschnitte durch Brechen statt und anschließend werden die durch das Brechen zerkleinerten Materialabschnitte gesintert.

Technisch gesehen können diese drei Verfahrensabläufe, wie in den Figuren 2a bis 2c schematisch dargestellt, umgesetzt werden: Im Falle des in der Figur 2a dargestellten Ausführungsbeispiel des erfindungsgemäßen Verfahrens wird zunächst ein fließfähiges Ausgangsgemisch 5, überwiegend enthaltend Aluminiumhydroxid, in einer geeigneten Aufnahmevorrichtung bereitgestellt.

Anschließend wird eine Schicht 6 aus dem Ausgangsgemisch 5 mit einer vorbestimmten, einheitlichen Schichtdicke 7 erzeugt und zwar dadurch, dass das Ausgangsgemisch 5 aus der Aufnahmevorrichtung auf einen Träger 18 in Form eines Endlosträgerbandes gegossen wird. Das Endlosträgerband 18 wird über die Wälzkörper 21 und 22 geführt. Zur Sicherstellung einer einheitlichen Schichtdicke 7 passiert das auf das Endlosträgerband 18 gegossene Ausgangsgemisch 5 einen Spalt 19 mit einer vorbestimmten Spalthöhe.

Nach dem Erzeugen der Schicht 6 wird in einem weiteren Verfahrensschritt eine netz- oder gitterförmige Struktur 12 aus Kunststoff in die Schicht 6 eingelagert und zwar im Wesentlichen dadurch, dass die netz- oder gitterförmige Struktur 12 von einer Rolle 23 abgewickelt und einlagig in den oberen Bereich der Schicht 6 eingelagert wird. Die Winkelgeschwindigkeit dieser Rolle 23 und die Geschwindigkeit des Trägerbands 18 werden aufeinander abgestimmt, um ein gleichmäßiges Abwickeln der netz- oder gitterförmigen Struktur 12 sicherzustellen. Die netz- oder gitterförmige Struktur 12 weist von der Seite betrachtet eine Höhe 38 kleiner oder gleich 0,5mm auf.

Die Schicht 6 mit der eingelagerten netz- oder gitterförmigen Struktur 12 wird danach mittels des Endlosträgerbands 18 durch einen Durchlaufofen 20 transportiert, in welchem der Verfahrensschritt eines etwaigen Trockenprozesses und des Sinterns stattfindet. Beim Sintern wird einerseits das Ausgangsgemischs 5 zumindest in Aluminiumoxid überführt und gleichzeitig die netz- oder gitterförmige Struktur 12 verbrannt mit der Folge, dass die Schicht 6 nach dem Sintern Sollbruchkanten 11 aufweist.

Nach dem Sintern wird die Schicht 6 mittels einer geeigneten Vorrichtung in plattenförmige Abschnitte 8 unterteilt, die in weiterer Folge einer Brechvorrichtung 24 zugeführt werden. Dort findet das Zerkleinern der Materialabschnitte 8 durch Brechen statt, wobei das Brechen entlang der Sollbruchkanten 11 erfolgt. Über eine Siebvorrichtung 25 werden die Schleifmittelteilchen 2 ausgeschieden.

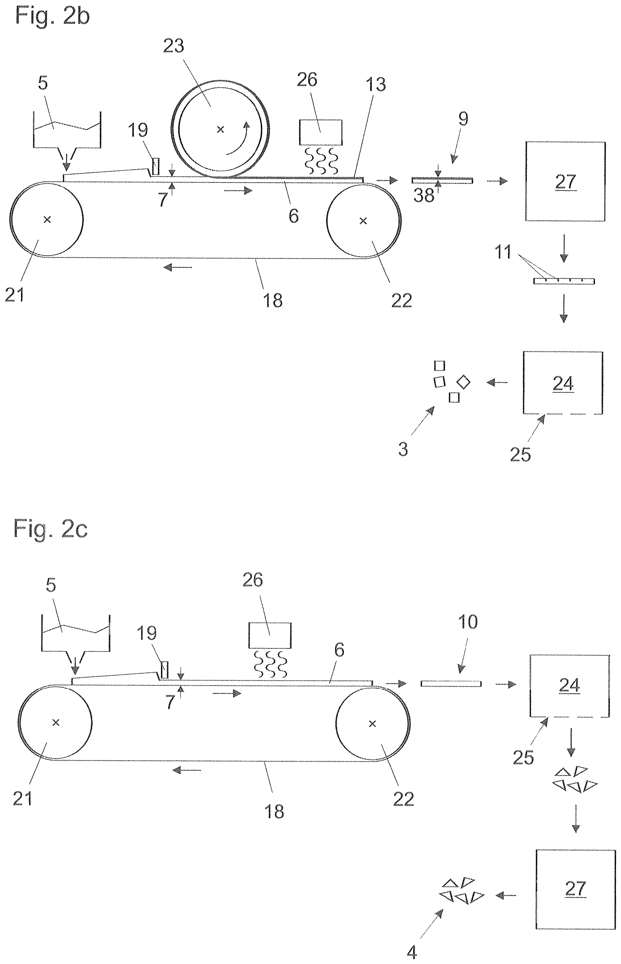

Bei dem in der Figur 2b dargestellten Ausführungsbeispiel der Erfindung wird in gleicher Weise wie bei dem Ausführungsbeispiel, das in der Figur 2a dargestellt ist, eine Schicht 6 aus dem Ausgangsgemisch 5 erzeugt, in welche eine netz- oder gitterförmige Struktur 13 eingelagert ist. Im Gegensatz zu dem in der Figur 2a dargestellten Ausführungsbeispiel wird die so präparierte Schicht 6 danach mittels einer Heizvorrichtung 26 vorgetrocknet und zwar bei einer Temperatur zwischen 150° Celsius und 400° Celsius. Bei dieser Temperatur ist die netz- oder gitterförmige Struktur 13 hitzebeständig. Durch das Vortrocknen wird dem Ausgangsgemisch 5 Flüssigkeit entzogen, sodass es weniger flexibel ist und an der netz- oder gitterförmigen Struktur 13 anhaftet. Hierdurch wird das Unterteilen der Schicht 6 in plattenförmige Materialabschnitte 9 begünstigt.

Die Materialabschnitte 9 werden in weiterer Folge einem Sinterofen 27 zugeführt, in welchem der Verfahrensschritt des Sinterns stattfindet. Auch in diesem Fall wird während des Sinterns zum einen das Ausgangsgemisch zumindest in Aluminiumoxid überführt und zum anderen die netz- oder gitterförmige Struktur 13 verbrannt, sodass Sollbruchkanten 11 an den Stellen entstehen, an denen sich vor dem Sintern die netz- oder gitterförmige Struktur 13 befunden hat. Nach dem Sintern werden die Materialabschnitte 9 durch Brechen in einer geeigneten Brechvorrichtung 24 zerkleinert und die Bruchstücke, das heißt die Schleifmittelteilchen 3, über eine Siebvorrichtung 25 ausgeschieden.

In dem in der Figur 2c dargestellten Ausführungsbeispiel des erfindungsgemäßen Herstellungsverfahrens wird wie bei den Ausführungsbeispielen, die in den Figuren 2a und 2b dargestellt sind, ein Ausgangsgemisch 5 bereitgestellt und hieraus eine Schicht 6 mit einer vorbestimmten, einheitlichen Schichtdicke 7 erzeugt. Nach dem Erzeugen wird die Schicht 6 mit einer Heizvorrichtung 26 bei einer Temperatur zwischen 150° Celsius und 400° Celsius vorgetrocknet.

Gemäß dem in der Figur 2c dargestellten Ausführungsbeispiel wird die Schicht 6 jedoch nicht mit Sollbruchkanten versehen, sondern direkt in plattenförmige Materialabschnitte 10 unterteilt, die in einer Brechvorrichtung 24 in Bruchstücke zerkleinert werden, wobei eine Größenauswahl der Bruchstücke mittels einer Siebvorrichtung 25 stattfindet. Diese Bruchstücke, d.h. die Schleifmittelteilchen 4, werden anschließend in einem Sinterofen 27 gesintert.

Vergleicht man die Figuren 1a bis 1c mit den Figuren 2a bis 2c so kann festgestellt werden, dass für jeden der in den Figuren 1a bis 1c dargestellten Verfahrensabläufe jeweils eine entsprechende technische Umsetzung in den Figuren 2a bis 2c dargestellt ist.

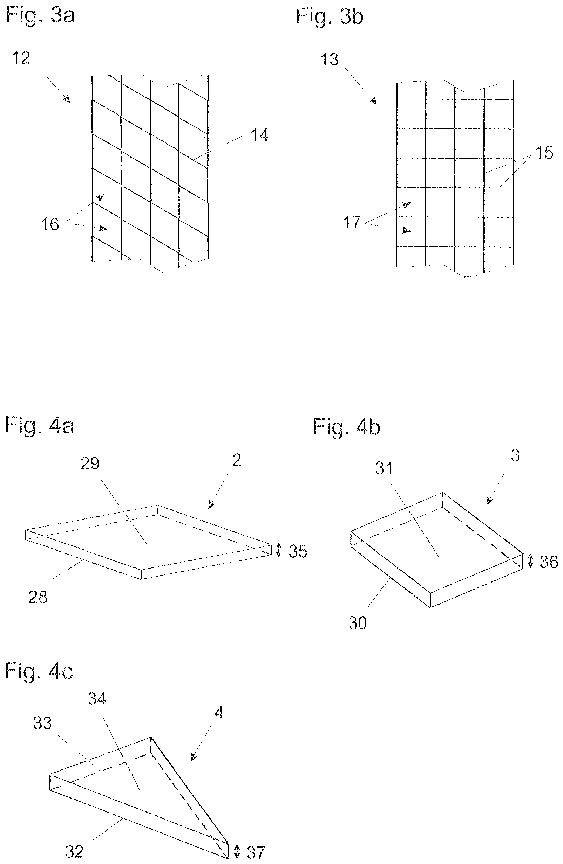

In den Figuren 3a und 3b sind beispielhaft zwei netz- oder gitterförmige Strukturen 12 bzw. 13 dargestellt, die zur Erzeugung der Sollbruchkanten zum Einsatz kommen können. Die netz- oder gitterförmigen Strukturen 12 bzw. 13 unterscheiden sich in ihrer Geometrie voneinander, wobei die Öffnungen 16 bzw. 17 der netz- oder gitterförmigen Struktur im Falle der Figur 3a rautenförmig und im Falle der Figur 3b quadratisch ausgebildet sind. Die Fäden oder Stege 14 bzw. 15 der netz- oder gitterförmigen Strukturen 12 bzw. 13 weisen eine Stärke kleiner oder gleich 0,5 Millimeter auf.

Die netz- oder gitterförmigen Strukturen 12 und 13 können sowohl bei dem Ausführungsbeispiel gemäß Figur 2a, als auch bei dem Ausführungsbeispiel gemäß Figur 2b verwendet werden. Es ist auch denkbar eine netz- oder gitterförmige Struktur zu verwenden, die Öffnungen mit unterschiedlichen Geometrien aufweist, und auf diese Weise eine Mischung von Schleifmittelteilchen mit entsprechend unterschiedlichen Geometrien herzustellen.

Die Figuren 4a bis 4c zeigen drei Beispiele für mittels des Verfahrens herstellbare Schleifmittelteilchen 2, 3 und 4, wobei das in der Figur 4a dargestellte Teilchen 2 eine rautenförmigen Grundfläche 29 mit einer vorgegebenen Kantenlänge 28 und einer Dicke 35 aufweist und das in der Figur 4b dargestellte Schleifmittelteilchen 3 eine quadratischen Grundfläche 31 mit einer vorgegebenen Kantenlänge 30 und einer Dicke 36. Diese Geometrien der Schleifmittelteilchen 2 und 3 entsprechen den in den Figuren 3a und 3b dargestellten Netz- bzw. Gittergeometrien.

Mittels des in der Figur 2c dargestellten Ausführungsbeispiels erhält man hauptsächlich Schleifmittelteilchen 4, die eine dreieckige Grundfläche 34 aufweisen. Wie ausgeführt lässt sich über die Siebvorrichtung 25 eine Größenauswahl treffen. Im konkreten Fall werden mittels dieser Siebvorrichtung 25 dreieckige Schleifmittelteilchen ausgewählt, deren längste Seite 32 zwischen 2,5 und 3,5 Millimeter, vorzugsweise 3,0 Millimeter, beträgt und deren durchschnittlich kürzeste Seitenlänge mindestens der doppelten Dicke 37 entspricht.

## Patentansprüche

1. Verfahren (1) zur Herstellung von Schleifmittel (2, 3, 4), **gekennzeichnet durch** die folgenden Verfahrensschritte:
i. Bereitstellen eines, vorzugsweise Aluminiumhydroxid enthaltenden, Ausgangsgemischs (5), welches durch Sintern zumindest in Aluminiumoxid überführbar ist, wobei das Ausgangsgemischs (5) vorzugsweise fließfähig ist,
ii. Erzeugen einer Schicht (6) aus dem Ausgangsgemisch (5) mit einer vorbestimmten, einheitlichen Schichtdicke (7),
iii. Unterteilen der Schicht (6) in voneinander getrennte , vorzugweise plattenförmige, Materialabschnitte (8, 9, 10),
iv. Zerkleinern der Materialabschnitte (8, 9, 10) durch Brechen in einer Brechvorrichtung (24), und
v. Sintern, wobei entweder die Schicht (6) oder die Materialabschnitte (9) oder die durch Brechen zerkleinerten Materialabschnitte (10) gesintert werden.

2. Verfahren (1) nach Anspruch 1, **dadurch gekennzeichnet, dass** die Schicht (6) nach dem Erzeugen und vor dem Zerkleinern der Materialabschnitte in einem weiteren Verfahrensschritt mit Sollbruchkanten (11) versehen wird.

3. Verfahren (1) nach Anspruch 2, **dadurch gekennzeichnet, dass** zur Erzeugung der Sollbruchkanten (11) eine netz- oder gitterförmige Struktur (12, 13), vorzugweise aus Kunststoff, in die Schicht (6) eingelagert wird, wobei die netz- oder gitterförmige Struktur (12, 13) während des Sinterns verbrennt.

4. Verfahren (1) nach Anspruch 3, **dadurch gekennzeichnet, dass** die netz- oder gitterförmige Struktur (12, 13) von der Seite betrachtet eine Höhe (38) kleiner oder gleich 0,5mm aufweist.

5. Verfahren (1) nach Anspruch 3 oder 4, **dadurch gekennzeichnet, dass** die Öffnungen (16, 17) der netz- oder gitterförmigen Struktur (12, 13) polygonal, vorzugsweise rautenförmig, quadratisch oder dreieckig, ausgebildet sind.

6. Verfahren (1) nach Anspruch 2, **dadurch gekennzeichnet, dass** die Sollbruchkanten (11) auf die Schicht (6), vorzugsweise mittels einer Walze, aufgeprägt werden.

7. Verfahren (1) nach einem der Ansprüche 1 bis 6, **dadurch gekennzeichnet, dass** die Schicht (6) nach dem Erzeugen vorgetrocknet wird, bevorzugt bei einer Temperatur zwischen 50°C und 500°C, besonders bevorzugt bei einer Temperatur zwischen 150°C und 400°C.

8. Verfahren (1) nach einem der Ansprüche 1 bis 7, **dadurch gekennzeichnet, dass** das Erzeugen der Schicht (6) im Wesentlichen durch Gießen erfolgt.

9. Verfahren (1) nach einem der Ansprüche 1 bis 8, **dadurch gekennzeichnet, dass** die Schicht (6) auf einem Träger (18), vorzugsweise einem Endlosträgerband, erzeugt wird.

10. Verfahren (1) nach einem der Ansprüche 1 bis 9, **dadurch gekennzeichnet, dass** die Schicht (6) mit einer Schichtdicke (7) von maximal 2,0mm, vorzugsweise mit einer Schichtdicke (7) von 0,1mm bis 1,0mm, erzeugt wird.

11. Verfahren (1) nach einem der Ansprüche 1 bis 10, **dadurch gekennzeichnet, dass** die Schichtdicke (7) der aus dem Ausgangsgemisch (5) erzeugten Schicht (6) über einen Spalt (19) mit einer vorbestimmten Höhe eingestellt wird.

12. Verfahren (1) nach einem der Ansprüche 1 bis 11, **dadurch gekennzeichnet, dass** das Sintern bei einer Temperatur zwischen 1200°C und 1800°C, vorzugsweise bei einer Temperatur zwischen 1200°C und 1500°C, durchgeführt wird.

13. Verfahren (1) nach einem der Ansprüche 1 bis 12, **dadurch gekennzeichnet, dass** das Sintern in einem Durchlaufofen (20) durchgeführt wird.

14. Verfahren (1) nach einem der Ansprüche 1 bis 13, **dadurch gekennzeichnet, dass** während des oder nach dem Zerkleinern der Materialabschnitte (8, 9, 10) durch Brechen eine Größenauswahl der Bruchstücke durch Sieben erfolgt.

## Claims

1. A method (1) of producing abrasives (2, 3, 4), **characterized by** the following method steps:
i providing a starting mixture (5) which preferably contains aluminum hydroxide and which is convertible by sintering at least into alumina, wherein the starting mixture (5) is preferably capable to flow,
ii. producing a layer (6) from the starting mixture (5) of a predetermined uniform layer thickness (7),
iii. dividing the layer (6) into mutually separated, preferably plate-shaped material portions (8, 9, 10),
iv. comminuting the material portions (8, 9, 10) by breaking in a breaking apparatus (24), and
v. sintering, wherein either the layer (6) or the material portions (9) or the material portions (10) comminuted by breaking are sintered.

2. The method (1) according to claim 1 **characterized in that** after production and prior to comminuting of the material portions the layer (6) is provided with predetermined breaking edges (11) in a further method step.

3. The method (1) according to claim 2 **characterized in that** for producing the predetermined breaking edges (11) a net- or lattice-shaped structure (12, 13), preferably of plastic, is embedded in the layer (6), wherein the net- or lattice-shaped structure (12, 13) burns during the sintering.

4. The method (1) according to claim 3 **characterized in that** the net- or lattice-shaped structure (12, 13) viewed from the side is less than or equal to 0.5mm in height (38).

5. The method (1) according to claim 3 or claim 4 **characterized in that** the openings (16, 17) of the net- or lattice-shaped structure (12, 13) are of a polygonal, preferably rhombic, square or triangular configuration.

6. The method (1) according to claim 2 **characterized in that** the predetermined breaking edges (11) are imprinted on the layer (6), preferably by means of a roller.

7. The method (1) according to one of the claims 1 to 6 **characterized in that** the layer (6) is pre-dried after the production, preferably at a temperature between 50°C and 500°C, more preferably at a temperature between 150°C and 400°C.

8. The method (1) according to one of the claims 1 to 7 **characterized in that** the layer (6) is produced substantially by casting.

9. The method (1) according to one of claims the 1 to 8 **characterized in that** the layer (6) is produced on a carrier (18), preferably on an endless carrier belt.

10. The method (1) according to one of the claims 1 to 9 **characterized in that** the layer (6) is produced with a layer thickness (7) of a maximum of 2.0 mm, preferably with a layer thickness (7) of 0.1 mm to 1.0mm.

11. The method (1) according to one of the claims 1 to 10 **characterized in that** the layer thickness (7) of the layer (6) produced from the starting mixture (5) is adjusted by way of a gap (19) with a predetermined height.

12. The method (1) according to one of the claims 1 to 11 **characterized in that** the sintering is carried out at a temperature between 1200°C and 1800°C, preferably at a temperature between 1200°C and 1500°C.

13. The method (1) according to one of the claims 1 to 12 **characterized in that** sintering is carried out in a continuous furnace (20).

14. The method (1) according to one of the claims 1 to 13 **characterized in that** during or after comminution of the material portions (8, 9,10) by breaking size selection of the fragments is effected by sieving.

## Revendications

1. Procédé (1) de production de matériaux abrasifs (2, 3, 4), **caractérisé par** les étapes de procédé suivantes :
i. mise à disposition d'un mélange de départ (5), contenant de préférence de l'hydroxyde d'aluminium, lequel peut être transformé au moins en oxyde d'aluminium par frittage, dans lequel le mélange de départ (5) est de préférence fluide,
ii. génération d'une couche (6) à partir du mélange de départ (5) avec une épaisseur de couche (7) uniforme prédéterminée,
iii. sous-division de la couche (6) en sections de matériau (8, 9, 10) séparées les unes des autres, de préférence en forme de plaque,
iv. broyage des sections de matériau (8, 9, 10) par rupture dans un dispositif de rupture (24), et
v. frittage, dans lequel soit la couche (6) soit les sections de matériau (9) soit les sections de matériau broyées par rupture (10) sont frittées.

2. Procédé (1) selon la revendication 1, **caractérisé en ce que** la couche (6) est dotée, après la génération et avant le broyage des sections de matériau, dans une autre étape de procédé, d'arêtes de rupture (11).

3. Procédé (1) selon la revendication 2, **caractérisé en ce que** pour la génération des arêtes de rupture (11) une structure réticulaire ou en treillis (12, 13), de préférence en plastique, est incorporée dans la couche (6), dans lequel la structure réticulaire ou en treillis (12, 13) brûle pendant le frittage.

4. Procédé (1) selon la revendication 3, **caractérisé en ce que** la structure réticulaire ou en treillis (12, 13) présente, vu du côté, une hauteur (38) inférieure ou égale à 0,5 mm.

5. Procédé (1) selon la revendication 3 ou 4, **caractérisé en ce que** les ouvertures (16, 17) de la structure réticulaire ou en treillis (12, 13) sont réalisées de manière polygonale, de préférence losangique, carrée ou triangulaire.

6. Procédé (1) selon la revendication 2, **caractérisé en ce que** les arêtes de rupture (11) sont imprimées sur la couche (6), de préférence au moyen d'un rouleau.

7. Procédé (1) selon l'une quelconque des revendications 1 à 6, **caractérisé en ce que** la couche (6) est préséchée après la génération, de préférence à une température entre 50 °C et 500 °C, de manière particulièrement préférée à une température entre 150 °C et 400 °C.

8. Procédé (1) selon l'une quelconque des revendications 1 à 7, **caractérisé en ce que** la génération de la couche (6) a lieu sensiblement par coulage.

9. Procédé (1) selon l'une quelconque des revendications 1 à 8, **caractérisé en ce que** la couche (6) est générée sur un support (18), de préférence une bande de support sans fin.

10. Procédé (1) selon l'une quelconque des revendications 1 à 9, **caractérisé en ce que** la couche (6) est générée avec une épaisseur de couche (7) de maximum 2,0 mm, de préférence avec une épaisseur de couche (7) de 0,1 mm à 1,0 mm.

11. Procédé (1) selon l'une quelconque des revendications 1 à 10, **caractérisé en ce que** l'épaisseur de couche (7) de la couche (6) générée à partir du mélange de départ (5) est réglée par le biais d'une fente (19) avec une hauteur prédéterminée.

12. Procédé (1) selon l'une quelconque des revendications 1 à 11, **caractérisé en ce que** le frittage est effectué à une température entre 1200 °C et 1800 °C, de préférence à une température entre 1200 °C et 1500 °C.

13. Procédé (1) selon l'une quelconque des revendications 1 à 12, **caractérisé en ce que** le frittage est effectué dans un four continu (20).

14. Procédé (1) selon l'une quelconque des revendications 1 à 13, **caractérisé en ce que** pendant ou après le broyage des sections de matériau (8, 9, 10) par rupture, une sélection de taille des fragments a lieu par tamisage.
